# EUROPÄISCHE PATENTANMELDUNG

(11) **EP 0 881 845 A2**
(43) Veröffentlichungstag der Anmeldung: **02.12.1998**
(21) Anmeldenummer: 98107256.4
(22) Anmeldetag: 21.04.1998
(51) Int. Cl.: H04Q 3/00

(54) **Kommunikationssystem**

(30) Priorität: 28.05.1997 DE 19722478
(71) Anmelder: SIEMENS AKTIENGESELLSCHAFT, 80333 München (DE)
(72) Erfinder: Leimkötter, Ulrich, 45888 Witten (DE)

(57) **Zusammenfassung**

Kommunikationssystem, bei dem eine Kommunikationsanlage (1) zumindest teilweise durch mehrere an die Kommunikationsanlage (1) angeschlossene Rechner (3a - 3c) gesteuert wird, wobei die Rechner (3a - 3c) ein Rechnernetz bilden. Überwachungsmittel (4, 4a - 4c) ermitteln die auf den einzelnen Rechnern (3a - 3c) zur Verfügung stehenden Rechnerkapazitäten für die Steuerung der Kommunikationsanlage (1), und Verwaltungsmittel (5, 5a - 5c) verteilen abhängig von den durch die Überwachungsmittel (4, 4a - 4c) ermittelten Rechnerkapazitäten die Steueraufgaben zur Steuerung der Kommunikationsanlage (1) auf die einzelnen Rechner (3a - 3c).

## Beschreibung

Die vorliegende Erfindung betrifft ein Kommunikationssystem und insbesondere ein Kommunikationssystem nach dem Oberbegriff des Anspruches 1, bei dem eine Kommunikationsanlage zumindest teilweise durch mehrere an die Kommunikationsanlage angeschlossene Rechner gesteuert wird.

Es ist bekannt, eine Telekommunikationsanlage, wie zum Beispiel eine Telefonnebenstellenanlage, durch mehrere Rechner zu steuern, wobei die Rechner in Form eines Rechnernetzes miteinander verbunden und an die Kommunikationsanlage angeschlossen sind. Im Gegensatz zu herkömmlichen Kommunikationssystemen zur Sprach- bzw. Datenkommunikation über die Sprachkanäle (d.h. die sogenannten B-Kanäle), handelt es sich bei dem der Erfindung zugrunde liegenden Kommunikationssystem um ein System, bei dem auf der Basis eines Rechnernetzes, d.h. eines Ethernets, alle Kommunikationsmedien, d.h. Sprach-, Daten- und Bildinformationen, an den Rechnernetzschnittstellen zur Verfügung gestellt werden.

Die Kommunikationsanlage des Kommunikationssystems kann beliebig ausgestaltet sein, wobei die Kommunikationsanlage insbesondere in Form eines Komponentenrahmens ausgebildet sein kann, in den die entsprechenden Schnittstellenbaugruppen für den Anschluß herkömmlicher stationärer oder mobiler Endgeräte (z.B. sogenannter Handys) oder entsprechender Amtsschnittstellen, wie beispielsweise einer ISDN-Schnittstelle, eingeschoben werden können.

Mehrere Rechner oder Personal Computer sind über die Rechnernetzschnittstellen an die Kommunikationsanlage angeschlossen, wobei über entsprechend auf den einzelnen Rechnern implementierte Kommunikationsmodule eine komfortable Kommunikation eines Benutzers mit dem jeweiligen Rechner möglich ist. Des weiteren sind auf jedem dieser Rechner Steuermodule implementiert, die bestimmte Steueraufgaben für die Steuerung der Kommunikationsanlage übernehmen. So können über die Steuermodule der einzelnen Rechner sowohl die vermittlungstechnischen Vorgänge der Kommunikationsanlage als auch bestimmte Leistungsmerkmale der Kommunikationsanlage eingestellt und gesteuert werden. Da das Kommunikationssystem auch betriebsbereit sein soll, wenn keiner der angeschlossenen Rechner des Rechnernetzes eingeschaltet oder betriebsbereit ist, ist es vorteilhaft, über die einzelnen Rechner des Rechnernetzes lediglich Leistungsmerkmale der Kommunikationsanlage einzustellen, die für die eigentliche Vermittlungstechnik der Kommunikationsanlage nicht erforderlich sind, d.h. die für die eigentliche Vermittlungstechnik erforderlichen Basisfunktionalitäten der Kommunikationsanlage sind ausschließlich in der Kommunikationsanlage selbst implementiert. Über die an die Kommunikationsanlage angeschlossenen Rechner können beispielsweise die Sprachmailboxen, die automatische Anrufweiterleitung, die Rufnummernvergabe oder auch die Gebührenabrechnung usw. des Kommunikationssystems gesteuert und übernommen werden, da diese Leistungsmerkmale nicht für die eigentliche Vermittlungstechnik des Kommunikationssystems erforderlich sind.

Bei bekannten Kommunikationssystemen, die wie zuvor beschrieben strukturiert sind, werden unterschiedliche Steueraufgaben zur Steuerung der Kommunikationsanlage von unterschiedlichen Rechnern wahrgenommen. Da in der Regel mit den einzelnen Steueraufgaben unterschiedliche Anforderungen an die für die Ausführung der Steueraufgabe erforderliche Rechnerkapazität verbunden sind, hat dies zur Folge, daß die einzelnen an die Kommunikationsanlage angeschlossenen Rechner unterschiedlich durch Steueraufgaben für die Steuerung der Kommunikationsanlage belastet werden. Im Extremfall kann es aufgrund der Übernahme von Steueraufgaben für die Steuerung der Kommunikationsanlage zu einer Überbelastung einzelner Rechner kommen. Eine derartige Überbelastung führt einerseits dazu, daß die Steuerung der Kommunikationsanlage nicht mehr mit der gewohnten hohen Geschwindigkeit ausgeführt werden kann, so daß bestimmte Funktionen der Kommunikationsanlage gegebenenfalls blockiert werden können. Da zudem jeder Rechner in der Regel nicht ausschließlich für die Kommunikationsanlagensteuerung vorgesehen ist, sondern auch für weitere Benutzeranwendungen, wie beispielsweise Textverarbeitung, Drucken usw. zur Verfügung stehen soll, hat zum anderen eine Überbelastung eines Rechners aufgrund der Übernahme von Steueraufgaben für die Steuerung der Kommunikationsanlage zur Folge, daß auf dem entsprechenden Rechner nicht mehr ausreichend Rechnerkapazitäten für die Ausführung der sonstigen Benutzeranwendungen zur Verfügung stehen. Somit kann es zur Blockade oder Verzögerung von auf dem Rechner laufenden Benutzeranwendungen kommen, die nicht die Steuerung der Kommunikationsanlage betreffen.

Der vorliegenden Erfindung liegt daher die Aufgabe zugrunde, ein Kommunikationssystem der eingangs beschriebenen Art derart auszugestalten, daß eine reibungslose Steuerung der Kommunikationsanlage des Kommunikationssystems mit Hilfe der an die Kommunikationsanlage angeschlossenen Rechner möglich ist, ohne daß es zu einer Überbelastung eines dieser Rechner aufgrund der Übernahme von Steueraufgaben für die Steuerung der Kommunikationsanlage kommen kann.

Diese Aufgabe wird erfindungsgemäß durch ein Kommunikationssystem gemäß Anspruch 1 gelöst.

Erfindungsgemäß sind Überwachungsmittel vorgesehen, die die auf den einzelnen Rechnern des Rechnernetzes für die Steuerung der Kommunikationsanlage zur Verfügung stehenden Rechnerkapazitäten ermitteln und entsprechende Kapazitätsinformationen erzeugen. Des weiteren sind Verwaltungsmittel vorgesehen, die abhängig von diesen Kapazitätsinformationen die Steueraufgaben für die Steuerung der Kommunikationsanlage des Kommunikationssystems auf die einzelnen Rechner des Rechnernetzes verteilen.

Vorteilhafterweise sind die Überwachungsmittel mit den Verwaltungsmitteln gekoppelt oder integriert mit diesen ausgebildet.

Die Überwachungs- und Verwaltungsmittel können zentral vorgesehen sein, so daß die Überwachungsmittel gleichzeitig die zur Verfügung stehenden Rechnerkapazitäten sämtlicher Rechner des Rechnernetzes überwachen. Sobald die Verwaltungsmittel anhand der von den Überwachungsmitteln bereitgestellten Kapazitätsinformationen festgestellt haben, daß die auf einem Rechner für die Steuerung der Kommunikationsanlage zur Verfügung stehende Rechnerkapazität nicht oder nicht mehr ausreicht, wählen die Verwaltungsmittel anhand der Kapazitätsinformationen einen anderen Rechner aus, der genügend Rechnerkapazitäten für die Übernahme der entsprechenden Steueraufgabe zur Steuerung der Kommunikationsanlage bereitstellt. Wurde auf diese Weise eine Steueraufgabe von einem Rechner auf einen anderen Rechner übertragen, sorgen die Verwaltungsmittel zudem dafür, daß auch die für die Ausführung der entsprechenden Steueraufgabe erforderlichen aktuellen Betriebsraten des Kommunikationssystems von dem ursprünglichen Rechner auf den neu ausgewählten Rechner übertragen werden. Um für die Übernahme von Steueraufgaben zuverlässig einen geeigneten Rechner auswählen zu können, umfassen die Kapazitätsinformationen vorteilhafterweise auch Informationen über die für die Ausführung der einzelnen Steueraufgaben minimal benötigten Rechnerkapazitäten sowie die auf den einzelnen Rechnern maximal für die Kommunikationsanlagensteuerung zur Verfügung stehenden Rechnerkapazitäten, so daß stets gewährleistet ist, daß auf den einzelnen Rechnern ausreichend Kapazitäten für die "normale Arbeit", d.h. für auf den einzelnen Rechnern ablaufende Benutzeranwendungen usw. zur Verfügung stehen.

Gemäß einem bevorzugten Ausführungsbeispiel der vorliegenden Erfindung sind jedoch an jeden Rechner des mit der Kommunikationsanlage verbundenen Rechnernetzes einzelne Überwachungs- und Verwaltungsmittel gekoppelt, die die auf dem jeweiligen Rechner zur Verfügung stehenden Rechnerkapazitäten ermitteln und in Kommunikation mit den Überwachungs- und Verwaltungsmitteln der anderen Rechner eine systemweite Liste der momentan vorhandenen freien Rechnerkapazitäten pflegen. Sobald die Verwaltungsmittel eines Rechner feststellen, daß die auf dem entsprechenden Rechner für die Kommunikationsanlagensteuerung zur Verfügung stehende Rechnerkapazitäten nicht oder nicht mehr ausreichen, wählen die Verwaltungsmittel des entsprechenden Rechners anhand dieser Liste einen anderen Rechner aus, der für die Übernahme der jeweiligen Steueraufgabe ausreichend Rechnerkapazitäten zur Verfügung stellt, und reservieren anschließend mit Hilfe der Überwachungs- und Verwaltungsmittel des ausgewählten Rechners die für die Durchführung der übertragenen Steueraufgabe erforderliche Rechenzeit bzw. die erforderlichen Rechnerkapazitäten. Anschließend wird das für die Durchführung der übertragenen Steueraufgabe zur Steuerung der Kommunikationsanlage auf dem ausgewählten Rechner implementierte Steuermodul aktiviert, wobei das Steuermodul des ausgewählten Rechners mit Hilfe der Verwaltungsmittel Informationen darüber erhält, von welchem anderen Rechner dieses Steuermodul gestartet worden ist. Ebenso empfängt das Steuermodul des ausgewählten Rechners mit Hilfe der entsprechenden Verwaltungsmittel die für die Durchführung der übertragenen Steueraufgabe erforderlichen aktuellen Betriebsdaten von dem ursprünglich aktivierten Rechner. Die Liste mit den augenblicklich zur Verfügung stehenden Rechnerkapazitäten der einzelnen Rechner des Rechnernetzes wird von den Überwachungsmitteln der einzelnen Rechner laufend aktualisiert und erneuert.

Alternativ kann vorgesehen sein, daß die Überwachungsmittel die Kapazitätsinformationen, d.h. die Information über die auf dem einzelnen Rechner zur Verfügung stehenden Rechnerkapazitäten, nur erzeugen, wenn eine Steueraufgabe zur Steuerung der Kommunikationsanlage neu auf einem Rechner verteilt oder von einem Rechner auf einen anderen wegen einer drohenden Überbelastung eines Rechners übertragen werden soll.

Schließlich kann auch vorgesehen sein, daß die Überwachungsmittel Ausfälle einzelner Rechner des Rechnernetzes überwachen und - nach Erkennen eines Ausfalls eines Rechners - automatisch die bisher von dem ausgefallenen Rechner wahrgenommenen Steueraufgaben zur Steuerung der Kommunikationsanlage auf einen anderen geeigneten Rechner des an die Kommunikationsanlage angeschlossenen Rechnernetzes übertragen, der ausreichend Rechnerkapazitäten für die Übernahme dieser Steueraufgaben zur Verfügung stellt.

Die erfindungsgemäße Lösung gewährleistet eine automatische bestmögliche Nutzung aller auf den einzelnen Rechnern des an die Kommunikationsanlage angeschlossenen Rechnernetzes zur Verfügung gestellten Ressourcen- bzw. Rechnerkapazitäten. Eine Überbelastung und damit eine Blockierung eines Rechners für die Steuerung der Kommunikationsanlage oder für die Ausführung von auf dem Rechner laufenden Benutzeranwendungen wird vermieden. Eine bestmögliche Verteilung der einzelnen Steueraufgaben der Kommunikationsanlagensteuerung auf die einzelnen Rechner ist sichergestellt, so daß stets eine reibungslose Steuerung der Kommunikationsanlage mit Hilfe der einzelnen Rechner des Rechnernetzes gewährleistet ist.

Die Unteransprüche beschreiben allgemein vorteilhafte Ausführungsformen der vorliegenden Erfindung.

Die Erfindung wird nachfolgend anhand bevorzugter Ausführungsbeispiele unter Bezugnahme auf die Zeichnung näher beschrieben.
- Figur 1: zeigt ein erstes Ausführungsbeispiel des erfindungsgemäßen Kommunikationssystems,
- Figur 2: zeigt ein zweites Ausführungsbeispiel des erfindungsgemäßen Kommunikationssystems, und
- Figur 3a und 3b: zeigen beispielhaft den Inhalt der Kapazitätsinformationen, die von den Überwachungsmitteln des in Figur 1 und 2 gezeigten Kommunikationssystems erzeugt und bereitgestellt werden.

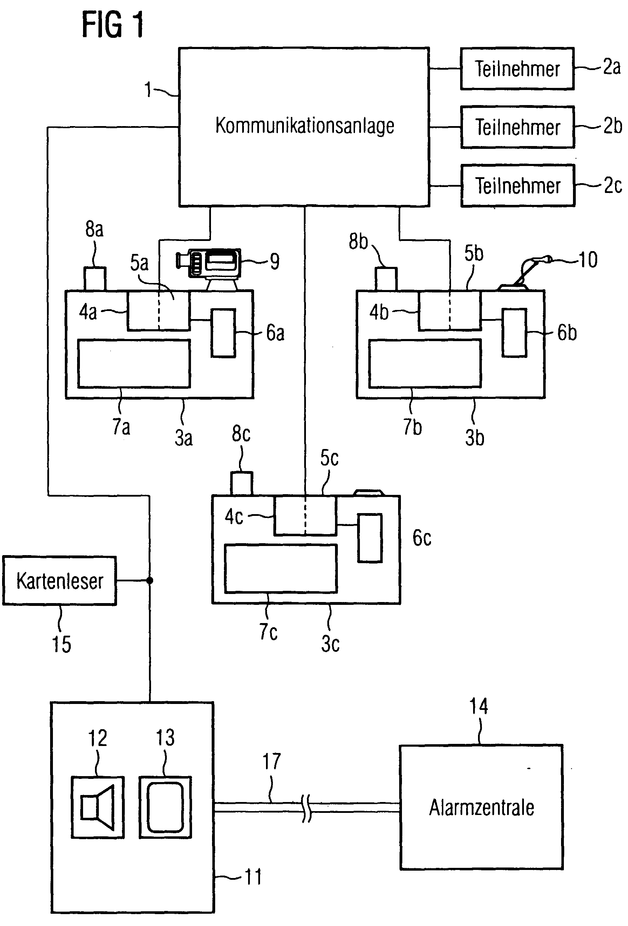

Figur 1 zeigt ein bevorzugtes Ausführungsbeispiel der vorliegenden Erfindung.

Das Kommunikationssystem umfaßt als wesentlichen vermittlungstechnischen Bestandteil eine Kommunikationsanlage 1, die beispielsweise eine öffentliche Vermittlungsstelle oder eine private Telefonnebenstellenanlage sein kann. Die Kommunikationsanlage 1 dient allgemein zur Übertragung von Kommunikationsinformationen zwischen Endgeräte-Teilnehmern 2a - 2c, die an die Kommunikationsanlage 1 anschließbar sind. Bei den zu übertragenden Kommunikationsinformationen kann es sich um Sprachinformationen, Daten- oder Bildinformationen handeln. An die Kommunikationsanlage 1 sind herkömmliche Endgeräte, wie zum Beispiel stationäre Telefone oder Basisstationen für mobile Endgeräte (Handys) anschließbar. Des weiteren können an die Kommunikationsanlage 1 herkömmliche Amtsschnittstellen, wie z.B. ISDN-Schnittstellen, angeschlossen werden.

Mehrere Rechner bzw. Personal Computer 3a - 3c sind miteinander zu einem Rechnernetz, d.h. einem Ethernet, verbunden und über Ethernetschnittstellen an die Kommunikationsanlage 1 angeschlossen. Bei dem in Figur 1 dargestellten Ausführungsbeispiel dient die Kommunikationsanlage 1 zum einen als Vermittler zur Übertragung der Kommunikationsinformationen zwischen den Teilnehmern 2a - 2c und zum anderen als Schnittstelle zwischen den einzelnen an die Kommunikationsanlage 1 angeschlossenen Rechnern 3a - 3c.

Auf jedem Rechner 3a - 3c ist ein Kommunikationsmodul implementiert, welches einem Benutzer eine komfortable Kommunikationsoberfläche für die Kommunikation und Bedienung des entsprechenden Rechners zur Verfügung stellt. Zusätzlich ist auf jedem Rechner 3a - 3c ein Steuermodul 7a - 7c implementiert, um bestimmte Steueraufgaben für die Kommunikationsanlagensteuerung auszuführen. Die einzelnen Steuermodule 7a - 7c können dabei einerseits für die Übernahme und Steuerung bestimmter vermittlungstechnischer Vorgänge der Kommunikationsanlage 1 und/oder andererseits für die Abwicklung bestimmter Leistungsmerkmale der Kommunikationsanlage 1 vorgesehen sein. Da der Betrieb der eigentlichen Vermittlungstechnik der Kommunikationsanlage 1, d.h. der Verbindungsaufbau zwischen den an die Kommunikationsanlage 1 angeschlossenen Teilnehmern 2a - 2c, auch bei einem Ausfall eines oder mehrerer Rechner 3a - 3c gewährleistet sein soll, ist es jedoch vorteilhaft, nur Steueraufgaben zur Steuerung der Kommunikationsanlage 1 auf die Steuermodule 7a - 7c der Rechner 3a - 3c auszulagern, die nicht für die eigentliche Vermittlungstechnik erforderlich sind. Bei diesen "sekundären" Steuermerkmalen kann es sich demnach insbesondere um Leistungsmerkmale, wie z.B. die Rufnummernvergabe, die automatische Rufweiterleitung, die Verwaltung der Sprachmailbox oder die Gebührenabrechnung usw., der Kommunikationsanlage 1 handeln.

Das aus den Rechnern 3a - 3c bestehende Rechnernetz stellt somit die Rechnerkapazitäten zur Kommunikationsanlagensteuerung zur Verfügung. Die auf jedem Rechner 3a - 3c für die Kommunikationsanlagensteuerung verfügbare freie Rechnerkapazität ist dabei stark abhängig von den Benutzeranforderungen des jeweiligen Rechners, d.h. beispielsweise Anwendungsprogrammen oder Druckaufträgen, die auf dem jeweiligen Rechner ablaufen. Der Benutzer des jeweiligen Rechners 3a - 3c darf durch die Abarbeitung der Kommunikationsanlagensteuerung nicht in seiner "normalen Arbeit" behindert werden. Aus diesem Grunde ist eine Überbelastung eines Rechners 3a - 3c zu vermeiden.

Daher ist bei dem in Figur 1 dargestellten Ausführungsbeispiel jeder Rechner 3a - 3c mit Rechnerkapazitäten-Beobachtungsmitteln 4a - 4c, 5a - 5c ausgestattet, die insbesondere an das (bereits zuvor beschriebene und in Figur 1 der Einfachheit halber nicht dargestellte) Kommunikationsmodul des jeweiligen Rechners 3a - 3c angekoppelt sind. Die Rechnerkapazitäten-Beobachtungsmittel ermitteln die auf dem jeweiligen Rechner 3a - 3c für die Kommunikationsanlagensteuerung augenblicklich zur Verfügung stehende freie Rechnerkapazität und dienen zur Verwaltung der einzelnen Steueraufgaben der Kommunikationsanlagensteuerung derart, daß die einzelnen Steueraufgaben abhängig von den auf den einzelnen Rechnern 3a - 3c jeweils zur Verfügung stehenden Rechnerkapazitäten ohne Überbelastung eines der Rechner verteilt werden.

Die Rechnerkapazitäten-Beobachtungsmittel umfassen aus diesem Grund jeweils Überwachungsmittel 4a - 4c, die die auf dem jeweiligen Rechner 3a - 3c für die Übernahme von Steueraufgaben zur Steuerung der Kommunikationsanlage 1 augenblicklich zur Verfügung stehenden Rechnerkapazitäten ermitteln und in Kommunikation mit den anderen Überwachungsmitteln 4a - 4c der weiteren Rechner 3a - 3c eine systemweite Informationsliste mit entsprechenden Kapazitätsinformationen erzeugen und pflegen. Des weiteren umfassen die Rechnerkapazitäten-Beobachtungsmittel jeweils Verwaltungsmittel 5a - 5c die auf die zuvor beschriebene Informationsliste mit den Kapazitätsinformationen, welche jeweils in entsprechenden Speichermitteln 6a - 6c abgelegt sein können, zugreifen und auswerten. Sobald die Verwaltungsmittel 5a - 5c eines Rechners 3a - 3c feststellen, daß die auf dem entsprechenden Rechner zur Verfügung stehenden Rechnerkapazitäten nicht oder nicht mehr für die Übernahme bzw. Ausführung einer Steueraufgabe zur Kommunikationsanlagensteuerung ausreichen, wählen die Verwaltungsmittel 5a - 5c des entsprechenden Rechners 3a - 3c anhand der Kapazitätsinformationen der Informationsliste einen anderen Rechner aus, der ausreichend Rechnerkapazitäten, d.h. Ressourcen, für die Übernahme der entsprechenden Steueraufgabe bzw. Steuerkomponente zur Kommunikationsanlagensteuerung bereitstellt.

Um zuverlässig einen geeigneten Rechner auswählen zu können, benötigen in diesem Fall die Verwaltungsmittel 5a - 5c Informationen über die für die Übernahme bzw. Ausführung der jeweiligen Steueraufgabe bzw. Steuerkomponente minimal benötigte Rechnerkapazität. Des weiteren benötigen die Verwaltungsmittel 5a - 5c Informationen über die für jeden Rechner maximal zumutbare Belastung durch die Kommunikationsanlagensteuerung, damit auf jedem Rechner auch ausreichend Kapazitäten für die "normale Arbeit" des Rechners zur Verfügung stehen.

Die maximalen Belastungsgrenzen können für jeden Rechner 3a - 3c von einem Benutzer vorgegeben sein. Die zuvor genannten Informationen sind vorzugsweise ebenfalls in den Kommunikationsinformationen enthalten, welche jeweils in Speichermitteln 6a - 6c eines entsprechenden Rechners 3a - 3c abgelegt sind. Aufgrund dieser Informationen können die Verwaltungsmittel 5a - 5c eines Rechners 3a - 3c nunmehr einerseits entscheiden, wann und ob eine Überbelastung des jeweiligen Rechners 3a - 3c droht und andererseits in diesem Fall einen Rechner auswählen, der genügend freie Kapazitäten für die Übernahme einer Steueraufgabe von dem stark belasteten Rechner bereitstellt. Nach der Auswahl eines geeigneten Rechners wird mit Hilfe der Verwaltungsmittel des ausgewählten Rechners die für die Übernahme der Steuerkomponente bzw. der Steueraufgabe erforderliche Rechnerkapazität und Rechnerzeit reserviert und das Steuermodul 7a - 7c des ausgewählten Rechners zur Abarbeitung der übertragenen Steuerkomponente aktiviert und gestartet. Das Steuermodul 7a - 7c mit der aktivierten Steuerkomponente des ausgewählten Rechners erhält Informationen, von welchem anderen Rechner das Steuermodul gestartet worden ist, und kann somit über die Verwaltungsmittel des neu gestarteten Rechners sowie das Rechnernetz die für die Ausführung der Steuerkomponente benötigten aktuellen Betriebsdaten des Kommunikationssystems von dem vormals zuständigen Rechner abfragen. Nach dem Start der Steueraufgabe bzw. der Steuerkomponente auf dem neu ausgewählten Rechner beenden die Verwaltungsmittel des vormals zuständigen Rechners die Ausführung dieser Steueraufgabe und die Kapazitätsinformationen, d.h. die in den Speichern 6a - 6c abgelegte Informationsliste, werden entsprechend der neuen Aufgabenverteilung von den Überwachungsmitteln 4a - 4c aktualisiert und erneuert.

Die Überwachungsmittel 4a - 4c können die Kapazitätsinformationen, welche in den Speichermitteln 6a - 6c abgelegt sind, kontinuierlich, d.h. laufend erneuern. Ebenso kann jedoch auch vorgesehen sein, daß die Überwachungsmittel 4a - 4c diese Kapazitätsinformationen erst erstellen, wenn eine Überbelastung 3a - 3c droht und demzufolge eine Anfrage für die Übertragung der Steueraufgaben bzw. Steuerkomponenten des stark belasteten Rechners vorliegt. Die kontinuierliche Erstellung und Erneuerung der Kapazitätsinformationen durch die Überwachungsmittel 4a - 4c ist insbesondere bei großen Rechnernetzen vorzuziehen.

Da im Falle eines Ausfalls eines der Rechner 3a - 3c keine Rückmeldung von dem ausgefallenen Rechner möglich ist, so daß die Überwachungsmittel 4a - 4c der anderen Rechner nicht die Belastung sowie die zur Verfügung stehenden Rechnerkapazitäten des ausgefallenen Rechners feststellen können, überwachen die Überwachungsmittel 4a - 4c die jeweils anderen Rechner des Rechnernetzes auf ihre Betriebsfähigkeit, so daß die Verwaltungsmittel 5a - 5c der anderen Rechner bei Erkennen eines Ausfalls eines der Rechner anhand der in den Speichern 6a - 6c abgelegten Kapazitätsinformationen die Steueraufgaben bzw. Steuerkomponenten, die zuvor auf dem ausgefallenen Rechner ausgelagert waren, auf entsprechend geeignete funktionsfähige Rechner des Rechnernetzes übertragen können, welche ausreichend Kapazitäten für die Übernahme dieser Steueraufgaben besitzen. Der Ausfall eines Rechners kann durch die Überwachungsmittel 4a - 4c der anderen Rechner des Rechnernetzes einfach dadurch festgestellt werden, daß keine Rückmeldung des ausgefallenen Rechners auf ein entsprechendes Anfragesignal vorliegt, mit dem gewöhnlich die Überwachungsmittel 4a - 4c die rechnerspezifische Auslastung sowie die weiteren rechnerspezifischen Kapazitätsinformationen, welche in den Speichermitteln 6a - 6c abgelegt werden, abfragen und feststellen.

Die Überwachungsmittel 4a - 4c sowie die Verwaltungsmittel 5a - 5c können miteinander gekoppelt sein, wobei insbesondere die Verwaltungsmittel 5a - 5c in den Überwachungsmitteln 4a - 4c integriert ausgestaltet sein können.

Analog zu der zuvor beschriebenen Vorgehensweise wählen die Verwaltungsmittel 5a - 5c anhand der in den Speichern 6a - 6c abgelegten Kapazitätsinformationen ebenfalls einen geeigneten Rechner aus, der genügend Rechnerkapazitäten zur Verfügung stellt, falls eine zusätzliche, d.h. neue Steueraufgabe bzw. Steuerkomponente zur Steuerung der Kommunikationsanlage 1 auf einen der Rechner 3a - 3c zu verteilen ist.

Der Benutzer des Rechnernetzes bzw. die Benutzer der einzelnen Rechner 3a - 3c können rechnerspezifisch eine Deaktivierungszeit bzw. Power-Down-Zeit vorgeben, die einer Pausenzeit entspricht, nach deren Ablauf der entsprechende Rechner bzw. Personal Computer in den Power-Down-Zustand gefahren werden soll. Das heißt diese Deaktivierungszeit entspricht der Zeitspanne zwischen einer letzten Aktion des jeweiligen Rechners und einer automatischen Deaktivierung des Rechners. Im heruntergefahrenen Ruhezustand, d.h. im Power-Down-Zustand, sind die wesentlichen Komponenten des jeweiligen Rechners, wie zum Beispiel der Monitor oder die Festplatte usw., deaktiviert, während die Netzkarte des entsprechenden Rechners 3a - 3c weiterhin aktiv ist und auch die Rechnerkapazitäten-Beobachtungsmittel, d.h. die Überwachungsmittel 4a - 4c und die Verwaltungsmittel 5a - 5c, des jeweiligen Rechners 3a - 3c im RAM-Speicher des jeweiligen Rechners weiterhin ablaufen und aktiv sind.

Die Überwachungsmittel 4a - 4c überwachen nach jeder Aktion eines Rechners 3a - 3c den Ablauf dieser Power-Down-Zeit und veranlassen das automatische Herunterfahren des jeweiligen Rechners 3a - 3c, falls nach einer Aktion des entsprechenden Rechners die vorgegebene Power-Down-Zeit bzw. Deaktivierungszeit verstreicht, ohne daß eine weitere oder neue Aktion des jeweiligen Rechners ausgeführt worden ist. Vor dem Herunterfahren des jeweiligen Rechners ermitteln jedoch die Verwaltungsmittel 5a - 5c des jeweiligen Rechners 3a - 3c anhand der in den Speichern 6a - 6c abgelegten Kapazitätsinformationen bzw. der Informationsliste einen oder mehrere andere Rechner, die ausreichend Rechnerkapazitäten für die Übernahme der Steueraufgaben des herunterzufahrenden Rechners bereitstellen. Nachdem die Verwaltungsmittel 5a - 5c des zu deaktivierenden Rechners 3a - 3c einen anderen Rechner ausgewählt haben, der die bisher von dem zu deaktivierenden Rechner ausgeführten Steueraufgaben zur Steuerung der Kommunikationsanlage 1 übernehmen kann, werden diese Steueraufgaben bzw. Steuerkomponenten - wie im Prinzip bereits zuvor beschrieben worden ist - auf den ausgewählten anderen Rechner übertragen und das Steuermodul 7a - 7c des anderen Rechners aktiviert, um die übertragene Steuerkomponente zu starten. Anschließend wird der zu deaktivierende Rechner heruntergefahren, wobei das Herunterfahren unmittelbar durch die Überwachungsmittel 4a - 4c des entsprechenden Rechners oder durch Zusammenwirken mit den Verwaltungsmitteln 5a - 5c des entsprechenden Rechners herbeigeführt werden kann.

Für den Fall, daß die Überwachungsmittel 4a - 4c der Rechner 3a - 3c eine drohende Überbelastung eines der Rechner 3a - 3c feststellen und somit erkennen, daß die auf den Rechnern 3a - 3c für die Kommunikationsanlagensteuerung zur Verfügung stehenden Rechnerressourcen nicht oder nicht mehr ausreichen, ermitteln die Überwachungs- und Verwaltungsmittel 4a - 4c bzw. 5a - 5c des oder der betroffenen Rechner 3a - 3c einen heruntergefahrenen Rechner des Rechnernetzes, der sich somit im Ruhezustand, d.h. im Power-Down-Zustand, befindet, veranlassen die Aktivierung dieses Rechners und verlagern anschließend die entsprechenden Steueraufgaben bzw. Steuerkomponenten auf den nunmehr aktivierten, d.h. hochgefahrenen, Rechner des Rechnernetzes, um das Rechnernetz zu entlasten.

Bei der Auslagerung von Steueraufgaben eines zu deaktivierenden, d.h. herunterzufahrenden Rechner des Rechnernetzes können den Verwaltungsmitteln 5a - 5c sämtlicher Rechner des Rechnernetzes von dem Benutzer des Rechnernetzes ein Lastrechner oder mehrere Lastrechner vorgegeben sein, die ausschließlich für die Auslagerung der Steueraufgaben bzw. Steuerkomponenten eines herunterzufahrenden Rechners in Frage kommen. Für den Fall, daß lediglich ein Lastrechner definiert ist, sind nach Herunterfahren der übrigen Rechner des Rechnernetzes, d.h. nach Ablauf der Power-Down-Zeit der einzelnen Rechner, ohne daß eine neue oder weitere Aktion des entsprechenden Rechners ausgeführt worden ist, sämtliche Steueraufgaben zur Steuerung der Kommunikationsanlage 1 auf ein und demselben Lastrechner konzentriert. Die Vorgabe des oder der Lastrechner kann durch eine entsprechende Information erfolgen, die nach Eingabe durch den Benutzer des Rechnernetzes Bestandteil der in den Speichern 6a - 6c abgelegten Kapazitätsinformationen bzw. der entsprechenden Informationsliste wird.

Durch die zuvor beschriebene automatische Deaktivierung bzw. das automatische Herunterfahren von Rechnern, die während einer vorgegebenen Deaktivierungs- bzw. Power-Down-Zeit nicht benutzt worden sind, kann umfangreich Energie für das Betreiben dieser Rechner eingespart werden.

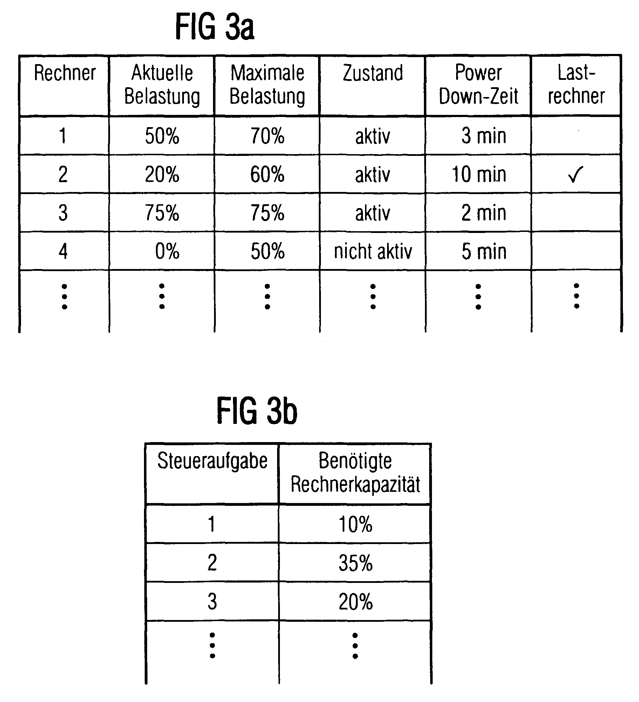

Figur 3a und 3b zeigen beispielhaft den Inhalt der Kapazitätsinformationen bzw. der systemweiten Informationsliste, welche in den in Figur 1 dargestellten Speichern 6a - 6c eines jeden Rechners 3a - 3c abgelegt ist und den jeweiligen Verwaltungsmitteln 5a - 5c zur Verfügung steht. Wie in Figur 3a gezeigt ist, umfassen die Kapazitätsinformationen zunächst rechnerspezifische Informationen über den Zustand und die Belastung der einzelnen Rechner des Rechnernetzes. Für jeden Rechner ist aufgeführt, wie hoch die aktuelle Belastung des jeweiligen Rechners durch die Übernahme von Steueraufgaben für die Steuerung der Kommunikationsanlage 1 ist (vgl. 2. Spalte der in Fig. 3a dargestellten Liste). Wie bereits zuvor beschrieben worden ist, wird diese Information laufend durch die Überwachungsmittel 4a - 4c der einzelnen Rechner 3a - 3c aktualisiert und über das Rechnernetz den Überwachungsmitteln der anderen Rechner mitgeteilt. In der dritten Spalte der in Fig. 3a dargestellten Liste ist rechnerabhängig eine Belastungsobergrenze für die Belastung des jeweiligen Rechners durch die Übernahme von Steueraufgaben zur Anlagensteuerung angegeben, wobei sich diese Belastungsobergrenze insbesondere danach richtet, wieviel Rechnerkapazität auf dem jeweiligen Rechner noch für die "normale Arbeit" an dem Rechner, wie z.B. für die Textverarbeitung oder die Bearbeitung von Druckaufträgen usw., zur Verfügung stehen soll. Der Wert dieser Belastungsobergrenze kann dem Kommunikationssystem einmalig durch den Benutzer mitgeteilt werden. Zudem kann die rechnerspezifisch von einem Benutzer vorgebbare Power-Down-Zeit, d.h. die Deaktivierungszeitspanne, die zwischen der letzten Aktion eines Rechners und dem beabsichtigten Herunterfahren des jeweiligen Rechners liegt, durch den Benutzer einmalig vorgegeben werden (vgl. 5. Spalte der in Fig. 3a dargestellten Liste). Schließlich kann durch den Benutzer des Rechnernetzes auch einer der Rechner, in Fig. 3a der Rechner 2, als Lastrechner definiert werden, auf den jeweils die Steueraufgaben eines herunterzufahrenden Rechners nach Ablauf des Power-Down-Zeit auszulagern sind. Alternativ können auch mehrere dieser Lastrechner definiert sein. Die Vorgabe bzw. Auswahl eines Rechners als Lastrechner kann insbesondere einfach durch Setzen eines entsprechenden Flags in der in Fig. 3a dargestellten Liste erfolgen. Schließlich umfaßt die in Fig. 3a dargestellte Informationsliste auch Informationen über den augenblicklichen Zustand der einzelnen Rechner des Rechnernetzes (vgl. 4. Spalte der Liste), wobei heruntergefahrene Rechner den Zustand "nicht aktiv" zugewiesen bekommen. Die Informationen der zweiten und vierten Spalte der in Fig. 3a dargestellten Informationsliste werden kontinuierlich von den Überwachungsmitteln 4a - 4c der einzelnen Rechner 3a - 3c erneuert. Da die Überwachungsmittel 4a - 4c bzw. die entsprechenden Rechner 3a - 3c über das an die Kommunikationsanlage 1 angeschlossene Rechnernetz miteinander in Verbindung stehen und kontinuierlich die augenblicklich für die einzelnen Rechner 3a - 3c gültigen Informationen austauschen, handelt es sich bei der in Fig. 3a dargestellten Liste um eine systemweite Liste, deren Inhalt in den Speichern 6a - 6c der einzelnen Rechner 3a - 3c jeweils identisch ist.

Wie in Fig. 3b gezeigt ist, umfassen die in den Speichern 6a - 6c abgelegten Informationen zudem Informationen über die einzelnen von den Rechnern 3a - 3c zu übernehmenden Steueraufgaben zur Kommunikationsanlagensteuerung. Aus Fig. 3b ist ersichtlich, daß die in den Speichern 6a - 6c abgelegten Informationen aufgabenabhängig auch Informationen über die für die Ausführung der einzelnen Steueraufgabe bzw. Steuerkomponente minimal benötigte Rechnerkapazität enthalten. Aufgrund der in der zweiten und dritten Spalte der in Fig. 3a dargestellten Liste sowie der in der zweiten Spalte der in Fig. 3b dargestellten Liste enthaltenen Informationen können demnach die Verwaltungsmittel 5a - 5c der in Fig. 1 dargestellten Rechner 3a - 3c stets zuverlässig beurteilen, welcher der Rechner des Rechnernetzes augenblicklich für die überbelasteten oder herunterzufahrenden Rechners) in der Lage ist, da dieser Rechner ausreichend Rechnerkapazitäten für die Übernahme von Steueraufgaben zur Steuerung der Kommunikationsanlage 1 bereitstellt. Die in Fig. 3b dargestellten Informationen über die für die jeweilige Steueraufgabe bzw. Steuerkomponente minimal benötigte Rechnerkapazität können ebenfalls von dem Benutzer des Rechnernetzes oder auch von der Kommunikationsanlage 1 den Rechnern 3a - 3c des Rechnernetzes vorgegeben werden.

Bei dem in Fig. 1 dargestellten Ausführungsbeispiel umfaßt das an die Kommunikationsanlage 1 angeschlossene Rechnernetz einen Alarmrechner bzw. Alarmserver, dessen Aufgabe die Überwachung der einzelnen Rechner 3a - 3c bzw. deren Arbeitsplätze ist. Die Aufgaben des Alarmrechners 11 können jedoch ebenso auf einem der Rechner 3a - 3c implementiert sein, die an sich zur Übernahme bestimmter Steueraufgaben der Kommunikationsanlage 1 vorgesehen sind. Ebenso kann vorgesehen sein, daß jeder der Rechner 3a - 3c sich selbst gemäß der folgenden Beschreibung überwacht.

Der Alarmrechner 11 ist über die Kommunikationsanlage 1 mit den das eigentliche Rechnernetz 3a - 3c bildenden Rechnern verbunden und überwacht mindestens einen Parameter mindestens eines Rechners 3a - 3c. Vorzugsweise überwacht der Alarmrechner 11 - wie in Fig. 1 vorgesehen ist - mehrere Parameter sämtlicher Rechner 3a - 3c. Unter Parameter wird dabei allgemein eine beliebige Zustandsinformation eines Rechners verstanden, die von dem Rechner an den Alarmrechner 11 übertragen bzw. von dem Alarmrechner 11 über das Rechnernetz abgefragt werden kann.

Bei den von dem Alarmrechner 11 überwachten Parametern der Rechner 3a - 3c kann es sich beispielsweise um Zustandsinformationen hinsichtlich des Ein-/Ausschaltzustands der einzelnen Rechner 3a - 3c handeln. Erkennt beispielsweise der Alarmrechner 11, daß ein am Abend ausgeschalteter Rechner unbeabsichtigt bzw. ungewünscht eingeschaltet wird, wertet dies der Alarmrechner 11 als einen nicht autorisierten Eingriff in das Rechnernetz und erzeugt ein entsprechendes Warnsignal.

Ebenso können an den Rechnern 3a - 3c Bewegungssensoren 8a - 8c angebracht sein, die vorzugsweise den Arbeitsplatz des entsprechenden Rechners 3a - 3c überwachen und insbesondere am Abend, beispielsweise nach dem Ausschalten des entsprechenden Rechners, automatisch aktiviert werden. Die Bewegungsinformationen der Bewegungssensoren 8a - 8c werden über das Rechnernetz dem Alarmrechner 11 zur Verfügung gestellt, der ebenfalls ein Warnsignal erzeugt, falls einer der Bewegungssensoren 8a - 8c eine unbeabsichtigte Bewegung an dem Arbeitsplatz des entsprechenden Rechners 3a - 3c erfaßt.

Ebenso kann - wie beispielhaft anhand des Rechners 3a angedeutet ist - eine mit dem entsprechenden Rechner gekoppelte Videokamera 9 vorgesehen sein, die ebenfalls zumindest den Arbeitsplatz des entsprechenden Rechners überwacht und über das Rechnernetz Video- bzw. Bildinformationen dem Alarmrechner 11 zur Verfügung stellt, der durch Auswertung dieser Videoinformationen anhand einer bestimmten Mustererkennungssoftware beurteilen kann, ob sich eine ungewünschte Person in dem Raum des Rechners 3a befindet. Auch in diesem Fall erzeugt der Alarmrechner 11 ein entsprechendes Warnsignal.

Ebenso kann über das Rechnernetz die Betätigung der Eingabevorrichtung der einzelnen Rechner 3a - 3c, d.h. beispielsweise die Betätigung der entsprechenden Tastatur oder der Maus, überwacht werden, was insbesondere sinnvoll ist, falls sich der entsprechende Rechner im heruntergefahrenen Ruhezustand bzw. Power-Down-Zustand befindet, da in der Regel ein stillgelegter Rechner durch Betätigung der Tastatur oder der Maus wieder vollständig aktiviert werden kann. Erfaßt der Alarmrechner 11 eine ungewünschte Betätigung der Tastatur oder der Maus eines der Rechner 3a - 3c, gibt der Alarmrechner 11 ebenfalls ein entsprechendes Warnsignal aus.

Schließlich kann auch vorgesehen sein, daß der Arbeitsplatz der einzelnen Rechner 3a - 3c akustisch überwacht wird, um beispielsweise auf diese Weise ein ungewünschtes Eindringen einer Person in den Raum, dem der entsprechende Rechner angeordnet ist, zu erkennen. Die Überwachung des Arbeitsplatzes kann - wie in Fig. 1 beispielhaft anhand des Rechners 3b angedeutet ist - mit Hilfe eines Mikrofons 10 erfolgen, welches insbesondere an eine in den Rechner 3b eingebaute Soundkarte angekoppelt ist. Die von dem Mikrofon 10 erfaßten akustischen Informationen werden über das Rechnernetz an den Alarmrechner 11 übertragen, der wiederum diese Informationen auswertet und beispielsweise das Eindringen einer ungewünschten Person erkennt, falls die von dem Mikrofon 10 gelieferten akustischen Informationen eine einen bestimmten Grenzwert überschreitende Lautstärke anzeigen.

In jedem der zuvor genannten Fälle vergleicht der Alarmrechner 11 dementsprechend die von den Rechnern 3a - 3c gelieferten bzw. bereitgestellten Zustandsinformationen mit bestimmten vorgegebenen Sollwerten, die insbesondere in einem internen Speicher oder in Form einer Datenbank in dem Alarmrechner 11 abgelegt sein können. Sobald die von den Rechnern 3a - 3c gelieferten Zustandsinformationen von den vorgegebenen Sollwerten abweichen, d.h. mindestens ein von dem Alarmrechner 11 überwachter Parameter mindestens eines Rechners 3a - 3c nicht innerhalb eines vorgegebenen Sollbereiches liegt, erzeugt der Alarmrechner 11 ein Warnsignal und gibt dieses beispielsweise über einen Lautsprecher 12 akustisch oder über den Bildschirm bzw. Monitor 13 optisch aus. Ebenso kann vorgesehen sein, daß der Alarmrechner 11 ständig on-line über ein (nicht dargestelltes) Modern sowie die öffentliche Telefonleitung 17 mit einer Alarmzentrale 14, z.B. einem Sicherheitsdienst oder einer Polizeistation, verbunden ist, so daß der Alarmrechner 11 automatisch ein erzeugtes Warnsignal über die Telefonleitung 17 an die Alarmzentrale 14 weiterleitet und dort einen Alarm auslöst.

Da die Überwachung der Arbeitsplätze der Rechner 3a - 3c insbesondere dann sinnvoll ist, wenn sich die Benutzer der Rechner 3a - 3c nicht mehr in den einzelnen Räumen der Rechner 3a - 3c befinden, wird der Alarmrechner 11 vorzugsweise automatisch dann aktiviert, wenn die Benutzer der Rechner 3a - 3c nicht mehr anwesend sind. Zu diesem Zweck kann der Alarmrechner 11 insbesondere mit einem Anwesenheitskontrollsystem gekoppelt werden, welches den Alarmrechner 11 automatisch aktiviert, falls das Anwesenheitskontrollsystem die Abwesenheit der Benutzer der Rechner 3a - 3c erfaßt hat. Dieses Anwesenheitskontrollsystem kann insbesondere durch ein Arbeitszeiterfassungssystem, wie es heutzutage für die Gleitzeiterfassung von Arbeitnehmern üblich ist, gebildet werden, wobei das Arbeitszeiterfassungssystem beispielsweise in Form eines Magnetkartenlesers 15 realisiert sein kann. Jeder Arbeitnehmer meldet sich durch Einführen seiner spezifischen Magnetkarte in den Magnetkartenleser 15 am Morgen an bzw. am Abend ab, so daß der Kartenleser 15 einerseits die Arbeitszeit des entsprechenden Arbeitnehmers erfassen kann und andererseits stets über die An- bzw. Abwesenheit des entsprechenden Arbeitnehmers informiert ist. Alternativ kann vorgesehen sein, daß der Alarmrechner 11 durch Eingabe eines Kenncodes aktiviert werden kann, wobei die Eingabe entweder unmittelbar an dem Alarmrechner 11 oder durch einen Administrator an einem Administrationsrechner des Rechnernetzes erfolgen kann.

Die Kombination des in Fig. 1 dargestellten Rechnernetzes zur Kommunikationsanlagensteuerung 1 mit einem Alarmrechner 11, der - wie bereits zuvor beschrieben worden ist - das Rechnernetz überwacht, besitzt den Vorteil, daß die Ressourcen des Rechnernetzes direkt für die Überwachung der Arbeitsplätze der einzelnen Rechner ausgewertet und für die Auslösung eines entsprechenden Alarms ausgenutzt werden können.

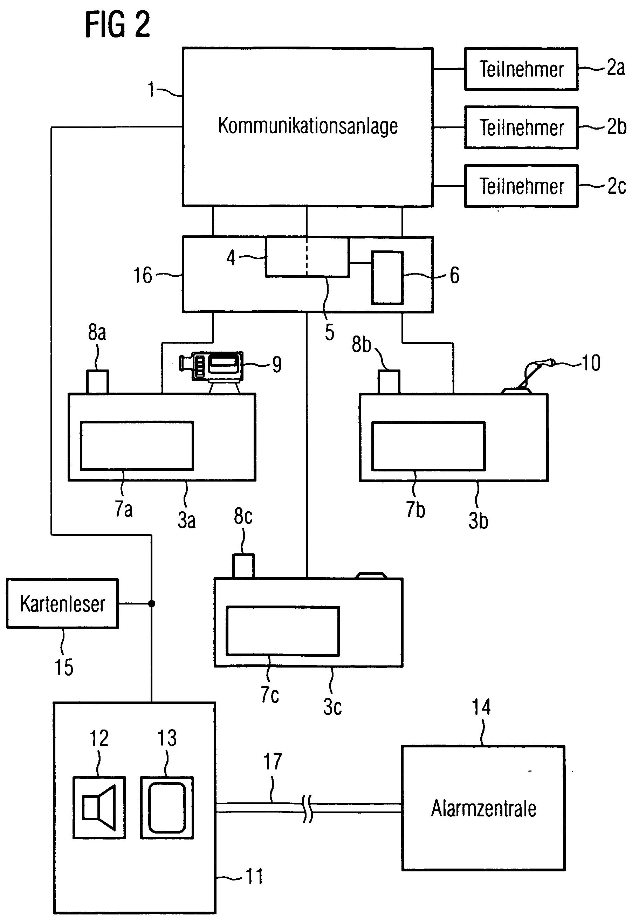

Figur 2 zeigt ein zweites Ausführungsbeispiel der vorliegenden Erfindung, wobei im Gegensatz zu dem in Fig. 1 dargestellten Ausführungsbeispiel nunmehr zentral ein Rechnerkapazitäten-Beobachter vorgesehen ist, der zentrale Überwachungsmittel 4 sowie zentrale Verwaltungsmittel 5 mit einem zentralen Speicher 6 für die bereits zuvor beschriebenen Kapazitätsinformationen bzw. die Informationsliste umfaßt. Die zentralen Überwachungsmittel 4 sowie die zentralen Verwaltungsmittel 5 sind für sämtliche Rechner 3a - 3c verantwortlich, welche Steuermodule 7a - 7c für die Kommunikationsanlagensteuerung, d.h. für die Übernahme bestimmter Steueraufgaben bzw. Steuerkomponenten für die Steuerung der Kommunikationsanlage 1 aufweisen. Die zentralen Überwachungs- und Verwaltungsmittel 4, 5 sowie der zentrale Kapazitätsinformationsspeicher 6 können in einem zentralen Rechner 16, z.B. einem Server, vorgesehen oder auch in einem der Rechner 3a - 3c sowie alternativ in dem Alarmrechner 11 implementiert sein, wobei die Überwachungs- und Verwaltungsmittel 4 und 5 jeweils über das Rechnernetz zentral mit sämtlichen Rechnern 3a - 3c verbunden sind, welche Steueraufgaben für die Kommunikationsanlage 1 übernehmen. Die Funktion der Überwachungsmittel 4 sowie die Verwaltungsmittel 5 in Kombination mit den Speichermitteln 6 des in Fig. 2 dargestellten Ausführungsbeispiels unterscheidet sich im wesentlichen nicht von dem in Fig. 1 dargestellten Ausführungsbeispiel, bei dem die Überwachungsmittel 4a - 4c, die Verwaltungsmittel 5a - 5c sowie die Speichermittel 6a - 6c jeweils dezentral für jeden einzelnen Rechner 3a - 3c vorgesehen sind.

Die zentralen Überwachungsmittel 4 überwachen sämtliche Rechner 3a - 3c, die zur Kommunikationsanlagensteuerung vorgesehen sind, und erstellen somit die in Fig. 3a und 3b dargestellten Kapazitätsinformationen, welche in den zentralen Speichermitteln 6 abgelegt werden. Erkennen die Überwachungsmittel, daß eine Überbelastung eines der von ihnen überwachten Rechner 3a - 3c droht, d.h. daß einer der Rechner nicht oder nicht mehr ausreichend Rechnerkapazitäten für die Übernahme einer Steueraufgabe bereitstellt, wählen die zentralen Verwaltungsmittel 5 anhand der in dem Speicher 6 abgelegten Kapazitätsinformationen bzw. der entsprechenden Informationsliste einen Rechner aus, der ausreichend Rechnerkapazitäten für die Übernahme der entsprechenden Steuerkomponente bereitstellt. Anschließend wird die Steueraufgabe auf den neu ausgewählten Rechner übertragen, wobei die zentralen Überwachungsmittel 4 automatisch die in dem Speicher 6 abgelegte Informationsliste entsprechend aktualisieren. Nach dem Starten der Steuerkomponente auf dem neu ausgewählten Rechner werden - wie bereits anhand Fig. 1 beschrieben worden ist - auch die für die Ausführung der Steuerkomponente erforderlichen aktuellen Betriebsdaten von dem vormals zuständigen Rechner an den neu ausgewählten Rechner übertragen, was insbesondere unter Steuerung und Aufsicht der zentralen Verwaltungsmittel 5 erfolgt. Die Überwachungsmittel 4 fragen die Rechnerkapazitäten der einzelnen Rechner 3a - 3c entweder kontinuierlich ab, so daß die in dem Speicher 6 abgelegten Kapazitätsinformationen laufend erneuert werden, oder erstellen die entsprechende Informationsliste mit den Kapazitätsinformationen nur, falls eine entsprechende Anfrage seitens der Kommunikationsanlage 1 oder der Rechner 3a - 3c vorliegt, wenn z.B. eine neue Steueraufgabe bzw. Steuerkomponente zur Steuerung der Kommunikationsanlage 1 auf die Rechner 3a - 3c aufgeteilt werden soll oder einer der Rechner 3a - 3c die zentralen Überwachungs- und Verwaltungsmittel 4, 5 mit der Umverteilung einer oder mehrerer seiner bisher von diesem Rechner ausgeführten Steueraufgaben bzw. Steuerkomponenten beauftragt.

Ebenso überwachen die gemäß Fig. 2 zentral vorgesehenen Überwachungsmittel 4 sämtliche für die Kommunikationsanlagensteuerung vorgesehenen Rechner 3a - 3c des Rechnernetzes hinsichtlich des Ablaufs der rechnerspezifisch vorgegebenen Deaktivierungs- bzw. Power-Down-Zeit. Wie bereits anhand Fig. 3a erläutert worden ist, ist für jeden Rechner 3a - 3c rechnerspezifisch eine bestimmte Power-Down-Zeit vorgegeben, die Bestandteil der in dem Speicher 6 abgelegten Informationsliste ist. Diese Deaktivierungs- bzw. Power-Down-Zeit definiert die Zeitspanne, die nach einer Aktion des entsprechenden Rechners verstreichen muß, ohne daß während dieser Zeitspanne eine weitere Aktion des jeweiligen Rechners ausgeführt wird, um den Rechner in einen Ruhezustand, d.h. den Power-Down-Zustand, fahren zu können. Haben die zentralen Überwachungsmittel 4 erkannt, daß die Power-Down-Zeit eines Rechners 3a - 3c verstrichen ist, veranlassen die Überwachungsmittel 4 das Deaktivieren, d.h. Herunterfahren des entsprechenden Rechners in den Power-Down-Zustand. Zuvor sorgen die Verwaltungsmittel 5 dafür, daß gegebenenfalls auf diesen herunterzufahrenden Rechner ausgelagerte Steuerkomponenten für die Steuerung der Kommunikationsanlage 1 auf andere Rechner des Rechnernetzes verteilt werden, die ausreichend Rechnerkapazitäten für die Übernahme dieser Steueraufgaben bereitstellen. Dies geschieht unter Auswertung der in dem Speicher 6 abgelegten Kapazitätsinformationen, welche beispielhaft in Fig. 3a und 3b dargestellt sind.

Ebenso veranlassen die Überwachungsmittel 4 die Aktivierung eines heruntergefahrenen bzw. deaktivierten Rechners, falls die zentralen Verwaltungsmittel 5 erkennen, daß die auf den aktivierten Rechnern des Rechnernetzes zur Verfügung stehenden Rechnerkapazitäten nicht oder nicht mehr für die Kommunikationsanlagensteuerung ausreichen. Die Verwaltungsmittel 5 übertragen anschließend bestimmte Steueraufgaben der aktivierten Rechner auf den nunmehr hochgefahrenen Rechner, um das Rechnernetz zu entlasten. Die Überwachungsmittel 4 gewährleisten eine entsprechende Aktualisierung der in dem Speicher 6 abgelegten Kapazitätsinformationen, welche insbesondere die auf den einzelnen Rechnern des Rechnernetzes zur Verfügung stehenden Rechnerkapazitäten für die Kommunikationsanlagensteuerung angeben.

Aus der vorhergehenden Beschreibung zu Fig. 2 ist ersichtlich, daß sich die Funktion des in Fig. 2 dargestellten Ausführungsbeispiels lediglich unwesentlich von dem in Fig. 1 dargestellten Ausführungsbeispiel unterscheidet, wobei gemäß Fig. 2 zentrale Überwachungs- und Verwaltungsmittel 4, 5 vorgesehen sind, die somit zentral für die Erstellung der Kapazitätsinformationen sowie die Verwaltung der Steueraufgaben zur Steuerung der Kommunikationsanlage 1 verantwortlich sind.

## Patentansprüche

1. Kommunikationssystem,
mit einer Kommunikationsanlage (1), um Kommunikationsinformationen zwischen Endgeräte-Teilnehmern (2a - 2c) der Kommunikationsanlage (1) zu übertragen, und
mit mindestens zwei an die Kommunikationsanlage (1) angeschlossenen Rechnern, wobei jeder Rechner Steuermittel (7a - 7c) zur Übernahme bestimmter Steueraufgaben für die Steuerung der Kommunikationsanlage (1) aufweist,
**gekennzeichnet durch**
Überwachungsmittel (4, 4a - 4c), welche die auf jedem Rechner (3a - 3c) für die Steueraufgaben zur Verfügung stehenden Rechnerkapazitäten in Form von Kapazitätsinformationen ermitteln, und
Verwaltungsmittel (5, 5a - 5c), welche abhängig von den durch die Überwachungsmittel (4, 4a - 4c) ermittelten Kapazitätsinformationen die Steueraufgaben auf die einzelnen Rechner (3a - 3c) verteilen.

2. Kommunikationssystem nach Anspruch 1,
**dadurch gekennzeichnet,**
daß die Verwaltungsmittel (5, 5a - 5c) mit den Überwachungsmitteln (4, 4a -4c) gekoppelt sind.

3. Kommunikationssystem nach Anspruch 1 oder 2,
**dadurch gekennzeichnet,**
daß die Überwachungsmittel (4) und die Verwaltungsmittel (5) zentral vorgesehen und mit allen Rechnern (3a - 3c) verbunden sind.

4. Kommunikationssystem nach Anspruch 3,
**dadurch gekennzeichnet,**
daß die Kapazitätsinformationen zudem aufgabenspezifische Informationen über die für die Übernahme der bestimmten Steueraufgaben erforderlichen minimalen Rechnerkapazitäten sowie rechnerspezifische Informationen über die für die Übernahme von Steueraufgaben auf den einzelnen Rechnern (3a - 3c) maximal zur Verfügung stehenden Rechnerkapazitäten umfassen.

5. Kommunikationssystem nach Anspruch 3 oder 4,
**dadurch gekennzeichnet,**
daß, falls die Verwaltungsmittel (5) feststellen, daß auf einem Rechner (3a - 3c) die zur Verfügung stehende Rechnerkapazität nicht oder nicht mehr für die Übernahme der entsprechenden Steueraufgabe ausreicht, die Verwaltungsmittel (5) anhand der Kapazitätsinformationen einen Rechner (3a - 3c) auswählen, der für die Übernahme der Steueraufgabe ausreichende Rechnerkapazitäten bereitstellt und die entsprechende Steueraufgabe auf den ausgewählten Rechner (3a - 3c) übertragen.

6. Kommunikationssystem nach Anspruch 5,
**dadurch gekennzeichnet,**
daß nach der Übertragung einer Steueraufgabe auf den ausgewählten Rechner (3a - 3c) die Verwaltungsmittel (5) die Steuermittel (7a - 7c) des ausgewählten Rechners (3a - 3c) mit der entsprechenden Steueraufgabe aktivieren und die Überwachungsmittel (4) die Kapazitätsinformationen entsprechend aktualisieren.

7. Kommunikationssystem nach Anspruch 5 oder 6,
**dadurch gekennzeichnet,**
daß die Verwaltungsmittel (5) nach Übertragung der Steueraufgabe von einem Rechner auf einen anderen (3a - 3c) auch die für die Steueraufgabe erforderlichen aktuellen Betriebsdaten von dem einen Rechner auf den ausgewählten anderen Rechner (3a - 3c) übertragen.

8. Kommunikationssystem nach Anspruch 1 oder 2,
**dadurch gekennzeichnet,**
daß jeder Rechner (3a - 3c) Überwachungsmittel (4a - 4c) und Verwaltungsmittel (5a - 5c) aufweist.

9. Kommunikationssystem nach Anspruch 8,
**dadurch gekennzeichnet,**
daß die Kapazitätsinformationen der Überwachungsmittel (4a - 4c) eines jeden Rechners (3a - 3c) zudem aufgabenspezifische Informationen über die für die Übernahme der bestimmten Steueraufgabe jeweils erforderliche minimale Rechnerkapazität sowie rechnerspezifische Informationen über die für die Übernahme von Steueraufgaben allgemein auf dem jeweiligen Rechner maximal zur Verfügung stehenden Rechnerkapazitäten umfassen.

10. Kommunikationssystem nach Anspruch 8 oder 9,
**dadurch gekennzeichnet,**
daß, falls die Verwaltungsmittel (5a - 5c) eines Rechners (3a - 3c) feststellen, daß die auf dem entsprechenden Rechner (3a - 3c) für die Übernahme der entsprechenden Steueraufgabe zur Verfügung stehenden Rechnerkapazitäten nicht oder nicht mehr ausreichen, die Verwaltungsmittel (5a - 5c) des entsprechenden Rechners (3a -3c) anhand der Kapazitätsinformationen einen anderen Rechner auswählen, der für die Übernahme der entsprechenden Steueraufgabe ausreichend Rechnerkapazitäten bereitstellt, und die entsprechende Steueraufgabe auf den ausgewählten Rechner übertragen.

11. Kommunikationssystem nach Anspruch 10,
**dadurch gekennzeichnet,**
daß die Verwaltungsmittel (5a - 5c) nach der Übertragung der Steueraufgabe auf den ausgewählten Rechner (3a - 3c) die Steuermittel (7a - 7c) des ausgewählten Rechners (3a - 3c) mit der entsprechenden Steueraufgabe aktivieren und die Überwachungsmittel (4a - 4c) die Kapazitätsinformationen entsprechend aktualisieren.

12. Kommunikationssystem nach einem der Ansprüche 8 bis 11,
**dadurch gekennzeichnet,**
daß der ausgewählte Rechner, auf den die Steueraufgabe übertragen wurde, von demjenigen Rechner, dessen Steueraufgabe übertragen wurde, die für die Durchführung der Steueraufgabe erforderlichen aktuellen Betriebsdaten erhält.

13. Kommunikationssystem nach einem der vorhergehenden Ansprüche,
**dadurch gekennzeichnet,**
daß die Überwachungsmittel (4, 4a - 4c) die Kapazitätsinformationen kontinuierlich erstellen und erneuern.

14. Kommunikationssystem nach einem der Ansprüche 1 bis 12,
**dadurch gekennzeichnet,**
daß die Überwachungsmittel (4, 4a -4c) die Kapazitätsinformationen nur erstellen, falls eine Steueraufgabe von einem der Rechner (3a - 3c) übernommen werden soll.

15. Kommunikationssystem nach einem der vorhergehenden Ansprüche,
**dadurch gekennzeichnet,**
daß die Überwachungsmittel (4, 4a - 4c) die Kapazitätsinformationen in Listenform erstellen.

16. Kommunikationssystem nach einem der vorhergehenden Ansprüche,
**dadurch gekennzeichnet,**
daß die Überwachungsmittel (4, 4a - 4c) die Rechner (3a - 3c) auf ihre Betriebsfähigkeit überwachen, und die Verwaltungsmittel (5, 5a - 5c) bei Erkennen eines Ausfalls eines Rechners (3a - 3c) anhand der Kapazitätsinformationen dessen Steueraufgaben auf mindestens einen Rechner (3a - 3c) verteilen, der ausreichend Rechnerkapazitäten für die Übernahme dieser Steueraufgaben bereitstellt, und
daß die Überwachungsmittel (4, 4a - 4c) nach einer Verteilung der Steueraufgaben eines Rechners auf einen anderen Rechner (3a - 3c) die Kapazitätsinformationen entsprechend aktualisieren.
